# FASCICULE DE BREVET EUROPEEN

(11) **EP 1 518 614 B1**
(45) Date de publication et mention de la délivrance du brevet: **14.11.2007**
(21) Numéro de dépôt: 03447235.7
(22) Date de dépôt: 24.09.2003
(51) Int. Cl.: B09C 1/00, B08B 9/02, B01D 21/00

(54) **Installation et procédé de dépollution des nappes souterraines**
Vorrichtung und Verfahren zur Grundwassersanierung
Plant and process for aquifer remediation

(43) Date de publication de la demande: 30.03.2005
(73) Titulaire: ODS International S.A., 5330 Maillen (BE)
(72) Inventeur: Lesuisse, Philippe, 5330 Maillen (BE)
(74) Mandataire: Van Malderen, Michel

(56) Documents cités:
- EP-A- 1 334 780
- WO-A-03/076093

## Description

### Objet de l'invention

La présente invention se rapporte à une installation et à un procédé de dépollution de nappes souterraines, et en particulier à la dépollution des nappes phréatiques polluées par des hydrocarbures au sens large.

### Arrière-plan technologique et état de la technique

La contamination des sols et des eaux souterraines fait partie d'une géopollution globale devenue un problème environnemental majeur en Europe. Les ressources en eau potable par habitant sont en diminution constante et en particulier, les pays ne disposant pas d'une quantité d'eau de source suffisante, se voient menacés par l'augmentation du nombre de sites contaminés par des polluants qui atteignent les nappes phréatiques. La pollution des nappes phréatiques est le plus souvent due à des fuites sur des conduites ou des cuves d'hydrocarbures ou encore à l'infiltration de lixiviats d'un dépôt solide.

Dans la présente demande de brevet, le terme hydrocarbures s'entend au sens large, c'est-à-dire qu'il comprend tous les solvants hydrocarbonés aliphatiques et aromatiques, les solvants chlorés et autres sous-produits de la même famille non solubles dans l'eau et de densité inférieure à 1.

Dans le cas des pollutions par hydrocarbures, le seuil de détection à l'odeur et au goût est très faible, ce qui rend l'eau rapidement impropre à la consommation.

Différents procédés de décontamination des nappes phréatiques par voie physique sont connus. A titre d'exemples non exhaustifs, on peut citer le pompage de l'eau, l'écrémage du polluant surnageant, la ventilation par bullage dans la nappe et la filtration par membrane.

Une technique d'écrémage précise permettant d'écrémer des nappes phréatiques, même polluées par une couche très mince d'hydrocarbures a été divulguée dans la demande de brevet EP 1334780-A2. Ce document divulgue un dispositif d'écrémage de polluant pour nappe d'eau souterraine comprenant un flotteur avec un orifice collecteur qui se positionne exactement à l'interface entre la couche d'hydrocarbures et l'eau grâce à sa densité intermédiaire entre lesdites couches. Un système d'écrémage d'une telle précision ne peut cependant fonctionner que par aspiration.

La technique décrite dans cette demande de brevet rencontre donc la difficulté qu'une pompe à vide est généralement limitée à une hauteur d'aspiration d'approximativement 10 mètres, il s'agit là d'une hauteur correspondant à une réalité physique issue de la formule h = P/ρ.g (ρ étant la densité du liquide à aspirer, g représentant la gravité terrestre et P la pression atmosphérique). Les hydrocarbures ont généralement une densité comprise entre 0,6 et 0,8 g/cm³, ce qui augmente la hauteur d'aspiration théorique qui passe alors à environs 12 à 14 mètres. Cependant, il s'agit très souvent de mélanges d'eau et d'hydrocarbures qui diminuent fortement cette limite. Lorsqu'on part de données théoriques telles que 1,013 kg/cm² pour la pression atmosphérique et d'une valeur de 9,81 m/s² on obtient une hauteur exacte de 10,32 mètres. Il s'agit cependant là d'une hauteur purement théorique qui ne serait atteinte qu'avec une pompe capable de produire un vide absolu et qui fonctionnerait à un rendement de 100%.

Le vide absolu n'est bien entendu jamais atteint, surtout en milieu industriel, par ailleurs, on est confronté à des difficultés du type « entrée en ébullition » du liquide à pomper à de très faibles pressions qui font qu'en pratique, les hauteurs d'aspiration réellement atteintes ne dépassent généralement pas 8 mètres.

### Buts de l'invention

La présente invention vise à fournir une installation destinée à l'écrémage de polluants par aspiration des liquides polluants flottant à la surface des nappes d'eau souterraines et en particulier les hydrocarbures se situant à une profondeur supérieure à 10 mètres ainsi qu'à un procédé s'y rapportant.

### Résumé de l'invention

La présente invention divulgue une installation de dépollution de nappes aquifères polluées par des hydrocarbures fonctionnant au moins partiellement par aspiration, comprenant au moins une unité de mise sous vide et un dispositif d'écrémage, caractérisée en ce que ladite installation comprend en outre au moins une chambre de transfert et en ce que la distance entre ladite chambre de transfert et le dispositif d'écrémage et/ou la distance entre deux chambres de transfert consécutives est inférieure à 10 mètres et de préférence inférieure à 8 mètres. La distance étant toujours inférieure à celle calculée par les limites physiques de l'aspiration d'une colonne de liquide en fonction de la densité du liquide à aspirer et de la pression atmosphérique.

La présente invention divulgue par ailleurs un procédé de dépollution de nappes phréatiques polluées par des hydrocarbures, caractérisé en ce que une chambre de transfert est mise sous vide par l'intermédiaire d'une cuve sous vide, se trouvant en surface, ce qui permet d'aspirer le polluant se trouvant sur une nappe phréatique en contrebas de ladite chambre de transfert et en ce que ladite chambre de transfert une fois remplie, est remise à la pression atmosphérique par l'intermédiaire d'une vanne en position ouverte et en ce que ladite chambre de transfert est ensuite vidée de son contenu par l'intermédiaire d'un tuyau plongeant dans ladite chambre et relié à la cuve sous vide par l'intermédiaire de la vanne en position ouverte.

Le procédé selon l'invention montre en outre que plusieurs chambres de transfert sont positionnées en cascade à l'intérieur d'un puits et en ce que lesdites chambres de transfert sont successivement soumises au vide pour être remplies les unes après les autres de liquide polluant avant d'être remises l'une après l'autre à la pression atmosphérique pour permettre l'aspiration de leur contenu dans la chambre de transfert suivante qui est placée au-dessus de la chambre de transfert à une distance inférieure à 10 m, de préférence 8 m et qui sera vidée à son tour de son contenu vers la cuve sous vide se trouvant en surface.

Toujours selon l'invention, une pompe immergée peut être placée dans la chambre de transfert supérieure pour acheminer le liquide polluant vers la surface et remplacant ainsi la phase d'aspiration et la vidange de la chambre de transfert supérieure vers la surface.

Enfin, la présente invention montre l'utilisation de l'installation divulguée pour la dépollution de nappes souterraines par écrémage et aspiration des polluants flottant à la surface desdites nappes.

### Brève description des figures

La figure 1 représente une installation de dépollution des nappes souterraines fonctionnant par aspiration avec une seule chambre de transfert 1 et la position des vannes durant la phase de remplissage de ladite chambre. V1 est en position ouverte alors que V2 et V3 sont en position fermée.

La figure 2 représente la même installation que celle représentée sur la figure 1 mais en précisant la position des vannes en phase de vidange. V1 est en position fermée alors que V2 et V3 sont en position ouverte

La figure 3 représente une installation de dépollution avec deux chambres de transfert durant la phase de remplissage de la chambre de transfert inférieure 1 et la position correspondante des vannes. V1, V2 et V4 sont en position ouverte alors que V3 et V5 sont en position fermée

La figure 4 représente la même installation que celle représentée sur la figure 3 mais en précisant la position des vannes en phase de transfert de la chambre de transfert inférieure 1 à la chambre supérieure 2. V1, V2 et V5 sont en position ouverte alors que V3 et V4 sont en position fermée.

La figure 5 représente la même installation que celle représentée sur la figure 3 mais en précisant la position des vannes en phase de vidange de la chambre de transfert supérieure 2. V2, V3 et V5 sont en position ouverte alors que V1 et V4 sont en position fermée.

### Description détaillée de l'invention

Le pompage des produits liquides en profondeur s'effectue généralement à l'aide d'une pompe qui est installée au niveau des volumes à pomper, voire en contrebas de ceux-ci. La pompe est alors dite « en charge », ce qui favorise son amorçage et élimine les problèmes d'aspiration. La pompe en charge présente néanmoins l'inconvénient d'entraîner des mélanges de phase ce qui diminue fortement l'efficacité du système.

Certaines installations de pompage sont dites « immergées » et sont très répandues car on ne rencontre bien entendu pas de problème d'amorçage. Ces installations ont néanmoins également l'inconvénient de mélanger le liquide dans lequel elles sont immergées et de ne pas pouvoir faire fonctionner un flotteur avec un orifice d'aspiration tel qu'il est divulgué dans la demande de brevet EP 1334780-A2.

Dans le cas où la pompe est située en surface, un grand pouvoir d'aspiration de celle-ci est nécessaire pour les raisons exposées dans l'arrière-plan technologique. Les différentes pompes rencontrées pour le pompage par aspiration sont, sans être limitatif, les pompes à piston, les pompes péristaltiques, les pompes à palettes, les pompes à anneaux liquides, les pompes pneumatiques et les pompes multi-étages. Toutes ces pompes ont cependant comme dénominateur commun qu'elles sont limitées à la hauteur théorique déterminée par la pression atmosphérique et le poids de la colonne à aspirer.

La présente invention surmonte cette difficulté et propose une installation et un procédé capable de remonter un polluant et en particulier une couche d'hydrocarbures flottant à la surface d'une nappe phréatique 4 par aspiration à une profondeur supérieure à environ 10 mètres dans lequel les risques de désamorçage, par la présence d'air, n'a pas d'influence sur la remontée des produits.

Ceci se fait par l'installation de chambres de transfert 1,2, placées à des distances intermédiaires entre la source de polluant (à la surface de la nappe phréatique) et la pompe d'aspiration représentée par une cuve sous vide 9 pour subdiviser la profondeur de pompage en des distances inférieures à 10 m et de préférence inférieure à 8 m ou même à 6 m. Les chambres de transfert peuvent être de forme quelconque elles comportent généralement un réservoir dont la taille et la forme sont essentiellement fonction de la place disponible. Le modèle de base d'une chambre de transfert est cylindrique et possède un diamètre inférieur à 4 pouces, c'est-à-dire inférieur à 114 mm de façon à pouvoir être introduit dans un tuyau de ce diamètre. Cette chambre de transfert sera placée dans un puits 7, généralement cylindrique, et comportera dans sa partie supérieure deux raccords pour le branchement de deux tuyaux 6 et dans la partie inférieure, un branchement pour le raccordement d'un autre tuyau 6. Le raccordement situé à la partie inférieure de la chambre de transfert est prolongé par un tube appelé « tube plongeur haut » qui remonte à l'intérieur jusqu'à la partie supérieure de ladite chambre au-dessus du niveau d'équilibre du liquide polluant 8 une fois que celui-ci est aspiré. Mécaniquement, la chambre de transfert doit pouvoir supporter un vide poussé tel que celui créé par une pompe à vide performante.

Le procédé de pompage des polluants consiste alors en la création d'un vide par l'intermédiaire d'une cuve sous vide 9 dans une ou plusieurs chambres de transfert pouvant être positionnées en cascade pour diminuer la hauteur de pompage à vaincre en une seule fois. Cette opération se fait à l'aide d'un tuyau rigide ou flexible qui relie la chambre de transfert à la pompe à vide par l'intermédiaire de la cuve sous vide. L'avantage de ces chambres de transfert est qu'aucun élément mécanique n'est en mouvement et que l'ensemble est constitué de matières non-corrosive. Les risques de détérioration sont donc faibles et aucun autre apport d'énergie, en dehors du vide, n'est nécessaire à l'installation. Les différentes étapes du procédé peuvent alors être décrites de la façon suivante.

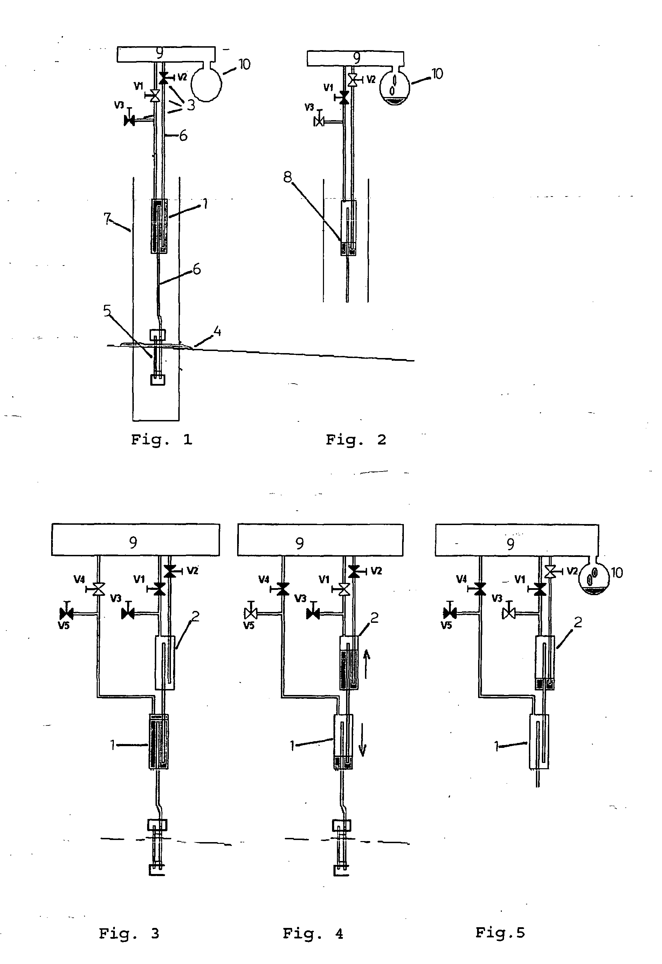

### Exemple d'application avec une seule chambre de transfert illustré dans les figures 1 et 2.

Dans cet exemple d'application, illustré dans la figure 1, l'installation de pompage utilise une seule chambre de transfert 1 située à une profondeur de 6 mètres dans un puits profond de 12 m. Deux tuyaux 6 sont raccordés respectivement par des vannes d'isolement V1 et V2 à la partie supérieure de l'installation vers un système de pompe à vide (cuve sous vide 1). Dans la partie inférieure de ladite chambre de transfert 1, un tuyau 6 descend dans le puits vers le niveau de l'eau et du liquide polluant 4 se situant à environ 12 mètres de profondeur par rapport à la partie supérieure du puits.

Par l'intermédiaire du tuyau 6 raccordé à la partie supérieure de la chambre de transfert 1 et la vanne V1 ouverte, le vide est créé et maintenu dans ladite chambre située à environ 6 mètres de profondeur dans le puits.

De par la dépression, le mélange d'eau et d'hydrocarbures situé à environ 6 mètres sous la chambre de transfert 1, et à 12 m de profondeur au total, est aspirée sans problème et remplit la chambre de transfert 1 par l'intermédiaire du tube plongeur haut. A cette occasion, le liquide polluant peut même remonter en partie dans le tube 6 qui crée le vide dans la chambre de transfert 1 et qui se trouve au-dessus de celle-ci. Ce phénomène est cependant sans conséquence sur l'efficacité de l'installation car au moment ou l'on coupe la pompe à vide, et qu'on relie la conduite à la pression atmosphérique, ledit liquide polluant retombe dans la chambre de transfert 1. Une fois remplie, ladite chambre 1 maintient son contenu car le niveau du tube plongeur dépasse le niveau du contenu 8 de ladite chambre 1 et aucun écoulement vers le bas n'est possible.

La chambre de transfert 1 est ensuite mise sous pression atmosphérique en isolant ce tuyau du vide par l'intermédiaire de la vanne V3 et dans un second temps, la dépression sur ladite chambre 1 est opérée par le second tuyau 6 installé à la partie supérieure de celle-ci et prolongé par un tube plongeur en ouvrant la vanne V2 alors que la dépression sur la première ligne d'aspiration vient d'être abandonnée et ladite chambre 1 mise à la pression atmosphérique.

Lorsque toutes ces conditions sont réunies, le contenu de la chambre de transfert 1 peut être évacué vers la surface, et en fin de vidange, le cycle peut recommencer. Ceci est illustré à la figure 2.

### Exemple d'application avec deux chambres de transfert illustré dans les figures 3,4 et 5.

Dans ce sas de figure, la première opération consiste à remonter le polluant du fond du puits se trouvant au niveau de la nappe 4 vers la première chambre de transfert 1. Ceci se fait grâce au maintien sous vide de ladite chambre 1 par un des tuyaux 6 reliés à l'unité de surface (cuve) 9 maintenue en permanence sous vide.

Quand la chambre de transfert 1 est remplie, on procède à une évaluation du temps nécessaire pour passer à l'opération suivante, ce temps peut alors être préprogrammé et cette donnée fait partie intégrante d'une gestion électronique globale de toute l'installation. Le contenu de la chambre de transfert 1 est ensuite transféré vers une autre chambre de transfert 2, dite « chambre de transfert supérieure » par le second tuyau 6 raccordé sur le tube plongeur de la chambre de transfert 1. Ceci entraînera l'évacuation de son contenu.

Cette succession d'étapes est bien entendu réglée par un jeu de vannes (V1 à V5) qui sont tantôt ouvertes, tantôt fermées en fonction de l'étape dans laquelle on se trouve. Ce déroulement est illustré dans les figures 3,4 et 5 ou la position des vannes dans les différentes étapes est décrite.

Pour pouvoir effectuer l'opération de transfert du liquide polluant, la chambre de transfert 1 est mise à pression atmosphérique par l'intermédiaire du premier tuyau 6 utilisé en coupant tout simplement l'arrivée du vide et en ouvrant la vanne en contact avec la pression atmosphérique V5. Dès que la chambre de transfert 1 est vidée vers la chambre de transfert 2 supérieure située plus haut, l'opération de remplissage de la chambre de transfert 1 peut recommencer dès que l'évacuation du contenu de la chambre de transfert 2 vers la surface est terminée.

Il s'agit donc ici en réalité d'un pompage cadencé qui conditionne bien entendu la vitesse de pompage et le débit. La même opération peut évidemment être répétée avec trois chambres de transfert (non illustré).

Au-delà de trois chambres de transfert, l'encombrement peut se révéler important pour assurer une efficacité économique du système. Dans ce cas, une pompe immergée peut être envisagée à partir de la deuxième chambre de transfert qui aura la fonction de ramener le polluant aspiré lors de la première étape à la surface, quelle que soit la profondeur de pompage qui ne sera alors plus fonction que de la puissance de ladite pompe immergée et le vide possible ne sera alors plus un facteur physique limitatif.

L'association de l'installation et du procédé de pompage divulgué dans la présente invention avec le dispositif d'écrémage d'hydrocarbures divulgué dans la demande de brevet EP 1 334 780 A2 constitue un outil de dépollution des nappes phréatiques extrêmement efficace car on arrive à maintenir une bonne qualité d'écrémage tout en surmontant l'obstacle de la profondeur théorique à atteindre par aspiration. La mise en oeuvre du système reste simple et donc fiable et économique. L'utilisation d'une pompe intermédiaire, souvent pneumatique, pour refouler les liquides situés à une hauteur supérieure à celle accessible par aspiration n'est donc plus nécessaire dans tous les cas. La succession de plusieurs chambres consécutives ainsi que l'utilisation éventuelle d'une pompe immergée dans une des chambres de transfert permet ainsi d'atteindre des profondeurs relativement importantes.

Légende :
1. Chambre de transfert inférieure 1
2. Chambre de transfert supérieure 2
3. Vannes V1 ; V2 ; V3 ; V4 ; V5 ; (vanne fermée en noir, vanne ouverte en clair)
4. Niveau de nappe
5. Dispositif d'écrémage
6. Tuyaux récolteurs
7. Puits
8. Niveau d'équilibre du polluant aspiré dans la chambre intermédiaire
9. Cuve mise sous vide
10. Réservoir de récolte

## Revendications

1. Installation de dépollution de nappes aquifères polluées par des hydrocarbures fonctionnant au moins partiellement par aspiration, comprenant au moins une unité de mise sous vide (9) et un dispositif d'écrémage (5), **caractérisée en ce que** ladite installation comprend en outre au moins une chambre de transfert (1,2) et **en ce que** la distance entre ladite chambre de transfert (1,2) et le dispositif d'écrémage (5) et/ou la distance entre deux chambres de transfert (1,2) consécutives est inférieure à 10 mètres et de préférence inférieure à 8 mètres.

2. Procédé de dépollution de nappes phréatiques polluées par des hydrocarbures, **caractérisé en ce que** une chambre de transfert (1,2) est mise sous vide par l'intermédiaire d'une cuve sous vide (9), se trouvant en surface, ce qui permet d'aspirer le polluant se trouvant sur une nappe phréatique en contrebas de ladite chambre de transfert (1,2) et **en ce que** ladite chambre de transfert (1,2) une fois remplie, est remise à la pression atmosphérique par l'intermédiaire d'une vanne (V3 ou V5) en position ouverte et **en ce que** ladite chambre de transfert (1,2) est ensuite vidée de son contenu par l'intermédiaire d'un tuyau (6) plongeant dans ladite chambre (1,2) et relié à la cuve sous vide (9) par l'intermédiaire de la vanne V2 en position ouverte.

3. Procédé selon la revendication 2, **caractérisé en ce que** plusieurs chambres de transfert (1,2) sont positionnées en cascade à l'intérieur d'un puits (7) et **en ce que** lesdites chambres de transfert (1,2) sont successivement soumises au vide pour être remplies les unes après les autres de liquide polluant avant d'être remises l'une après l'autre à la pression atmosphérique pour permettre l'aspiration de leur contenu dans la chambre de transfert (2) suivante qui est placée au-dessus de la chambre de transfert (1) à une distance inférieure à 10 m, de préférence 8 m et qui sera vidée à son tour de son contenu vers la cuve sous vide (9) se trouvant en surface.

4. Procédé selon la revendication 3 **caractérisé en ce que** une pompe immergée est placée dans la chambre de transfert supérieure (2) pour acheminer le liquide polluant vers la surface et remplacant ainsi la phase d'aspiration et la vidange de la chambre de transfert supérieure (2) vers la surface.

5. Utilisation de l'installation selon la revendication 1 pour la dépollution de nappes souterraines par écrémage et aspiration des polluants flottant à la surface desdites nappes.

## Claims

1. Installation of water-pollution control for ground water polluted by hydrocarbons functioning at least partly by suction, comprising at least one unit for creating a vacuum (9) and a skimming device (5), **characterised in that** said installation moreover comprises at least one transfer chamber (1,2) and **in that** the distance between said transfer chamber (1,2) and the skimming device (5) and/or the distance between two consecutive transfer chambers (1,2) is less than 10 metres and preferably less than 8 metres.

2. Method of water-pollution control from phreatic layers polluted by hydrocarbons, **characterised in that** a vacuum is created in a transfer chamber (1,2) by means of a vacuum tank (9) located on the surface, which allows to suck up the pollutant floating on a phreatic layer below said transfer chamber (1,2), **in that** said transfer chamber (1,2), once filled, is returned to atmospheric pressure by means of a valve (V3 or V5) in the open position, and **in that** said transfer chamber (1,2) is then emptied of its contents by means of a pipe (6) immersed in said chamber (1,2) and connected to the vacuum tank (9) by means of the valve V2 in the open position.

3. Method according to Claim 2, **characterised in that** several transfer chambers (1,2) are positioned in series inside a well (7) and **in that** said transfer chambers (1,2) are successively subjected to vacuum so as to be successively filled with liquid pollutant before they are successively returned to atmospheric pressure so that their contents can be sucked up in the next transfer chamber (2), which is located above the transfer chamber (1) at a distance of less than 10 metres, preferably 8 metres, and which will in turn be emptied of its contents towards the vacuum tank (9) located at the surface.

4. Method according to Claim 3, **characterised in that** an immersed pump is placed in the upper transfer chamber (2) in order to guide the liquid pollutant towards the surface and thereby replacing the suction phase and the draining of the upper transfer chamber (2) towards the surface.

5. Use of the installation according to Claim 1 for removing the water-pollution control of ground water by skimming and suction of the pollutants floating at the surface of said water.

## Patentansprüche

1. Anlage zur Reinigung von Grundwasser, das durch Kohlenwasserstoffe verunreinigt ist, die zumindest teilweise durch Absaugen funktioniert und mindestens eine Einheit zur Vakuumerzeugung (9) und eine Abschöpfvorrichtung (5) umfasst, **dadurch gekennzeichnet, dass** die besagte Anlage außerdem mindestens eine Transferkammer (1,2) umfasst, und **dadurch**, dass die Entfernung zwischen der besagten Transferkammer (1,2) und der Abschöpfvorrichtung (5) und/oder die Entfernung zwischen beiden nebeneinander liegenden Transferkammern (1,2) geringer ist als 10 Meter und vorzugsweise geringer als 8 Meter.

2. Verfahren zur Reinigung von Grundwasser, das durch Kohlenwasserstoffe verunreinigt ist, **dadurch gekennzeichnet, dass** in einer Transferkammer (1,2) mittels eines Vakuumbehälters (9), der sich an der Oberfläche befindet, ein Vakuum erzeugt wird, wodurch es ermöglicht wird, den Schadstoff anzusaugen, der sich auf einer Wasserfläche unterhalb der besagten Transferkammer (1,2) befindet, und **dadurch**, dass die besagte Transferkammer (1,2), wenn sie voll ist, mittels eines Ventils (V3 oder V5) in geöffneter Stellung wieder unter Luftdruck gesetzt wird, und **dadurch**, dass der Inhalt der besagten Transferkammer (1,2) anschließend mittels eines Rohres (6) entleert wird, das in die besagte Kammer (1,2) eintaucht und mit dem Vakuumbehälter (9) über ein Ventil V2 in geöffneter Stellung verbunden ist.

3. Verfahren nach Anspruch 2, **dadurch gekennzeichnet, dass** mehrere Transferkammern (1,2) kaskadenförmig im Inneren eines Brunnens (7) angeordnet sind und **dadurch**, dass in den besagten Transferkammern (1,2) nacheinander ein Vakuum erzeugt wird, damit sie sich nacheinander mit dem flüssigen Schadstoff füllen, bevor sie nacheinander wieder unter Luftdruck gesetzt werden, um das Absaugen ihres Inhalts in die nachfolgende Transferkammer (2) zu ermöglichen, die sich oberhalb der Transferkammer (1) in einer Entfernung von weniger als 10 m, vorzugsweise 8 m befindet und deren Inhalt wiederum in den Vakuumbehälter (9) entleert wird, der sich an der Oberfläche befindet.

4. Verfahren nach Anspruch 3, **dadurch gekennzeichnet, dass** eine Tauchpumpe in der oberen Transferkammer (2) platziert wird, um den flüssigen Schadstoff an die Oberfläche zu transportieren und so die Ansaugphase und das Entleeren der oberen Transferkammer (2) zur Oberfläche ersetzt.

5. Verwendung der Anlage nach Anspruch 1 für die Reinigung von Grundwasser durch Abschöpfen und Ansaugen der Schadstoffe, die an der Oberfläche dieses Wassers schwimmen.
